# EUROPEAN PATENT SPECIFICATION

(11) **EP 1 357 827 B1**
(45) Date of publication and mention of the grant of the patent: **30.06.2004**
(21) Application number: 02710231.8
(22) Date of filing: 07.02.2002
(51) Int. Cl.: A47J 43/24

(54) **CENTRIFUGAL DEVICE FOR WASHING AND DRYING SALADS AND THE LIKE**
ZENTRIFUGALVORRICHTUNG ZUM WASCHEN UND TROCKNEN VON SALAT UND DERGLEICHEN
DISPOSITIF DE CENTRIFUGATION DESTINE AU LAVAGE ET AU SECHAGE DES SALADES ET ANALOGUES

(30) Priority: 08.02.2001 IT TO20010019 U
(43) Date of publication of application: 05.11.2003
(73) Proprietor: Girmi S.P.A., 28887 Omegna (VERBANIA) (IT)
(72) Inventor: RHON, Renato; Girmi S.p.A., I-28887 Omegna (VERBANIA ) (IT)
(74) Representative: Quinterno, Giuseppe
(86) International application number: PCT/IB2002/000366
(87) International publication number: WO 2002/062189

(56) References cited:
- FR-A- 2 135 707
- FR-A- 2 739 770
- FR-A- 2 758 251
- US-A- 5 054 209

## Description

The present invention relates to a centrifuge for drying salad and the like.

More specifically, the invention relates to a centrifuge of the type comprising
a container which is open at the top,
a perforated basket which is rotatable in the container and which is likewise open at the top,
a lid which can be coupled to the container,
a drive member which is rotatable relative to the lid and which is capable of being coupled to the basket and of driving it in rotation, and
an operating unit comprising an electrical motor, capable of bringing about the rotation of the drive member relative to the lid and of the basket relative to the container.

US patent 5,054,209 describes and illustrates a centrifuge of that type for drying salad and the like, in which the operating unit comprises an electrical motor which is permanently secured to the lid. In a first embodiment illustrated in that United States patent, the electrical motor is secured on the lid in a position such that its shaft extends substantially parallel with the lid and is coupled to the rotatable drive member by way of a kinematic transmission which includes a bevel gear pair.

In a second embodiment illustrated in that earlier patent, the electrical drive motor is permanently secured to the lid in a position such that its shaft is substantially at right-angles to the lid.

The centrifuge known from the earlier United States patent has various disadvantages.
In the first place, since the electrical drive motor is permanently coupled to the lid and to the drive member for the basket of the centrifuge, it cannot be used for other purposes but, rather, is intended unequivocally for use in operating the centrifuge.

In addition, because the electrical motor is to be supplied with power by cable connection to the electrical mains, it may involve safety problems for the user.

An object of the invention is therefore to provide a centrifuge of the type specified above for drying salad and the like, which enables the disadvantages outlined above of the solutions according to the prior art to be avoided.

That object is achieved according to the invention with a centrifuge of the above-mentioned type, characterized in that the above-mentioned operating unit is separate and distinct from the lid and is capable of being inserted removably into a housing provided in the lid in such a manner that it is releasably coupled in rotation to the drive member; the operating unit also comprising at least one electrical battery, preferably of the rechargeable type, for supplying power to the motor.

According to a further characteristic of the invention, the operating unit comprises circuit means for controlling the electrical motor, which means can be activated by a manually operated switch and are capable of bringing about selectively the rotation of the motor in a predetermined direction at a relatively high speed or in both directions alternately, at a relatively low speed.

As will emerge more clearly hereinafter, owing to those characteristics, a centrifuge according to the invention is suitable not only for use in drying salad and the like but also for carrying out a true washing operation.

Further characteristics and advantages of the invention will emerge from the following detailed description, which is given purely by way of non-limiting example, with reference to the appended drawings in which:
Figure 1 is a perspective view of a centrifuge according to the invention;
Figure 2 is an exploded perspective view of the centrifuge shown in Figure 1;
Figure 3 is a further exploded perspective view of the centrifuge shown in the previous Figures;
Figure 4 is a perspective view of an operating unit including an electrical motor, and of an associated device for supplying electrical power;
Figure 5 is a top plan view of an operating unit for a centrifuge according to the invention;
Figure 6 is a sectional view taken on the line VI-VI of Figure 5; and
Figure 7 is a perspective view showing a control device having a lever for controlling a discharge opening of a centrifuge according to the invention.

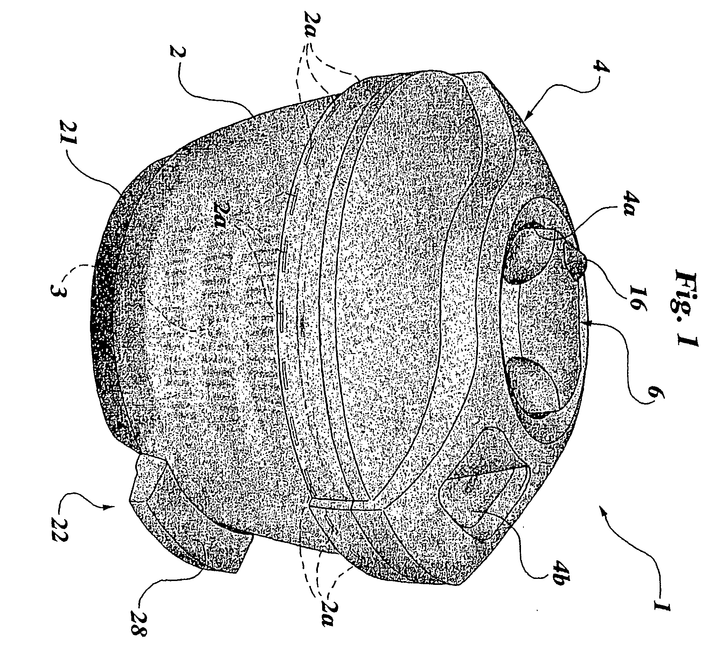

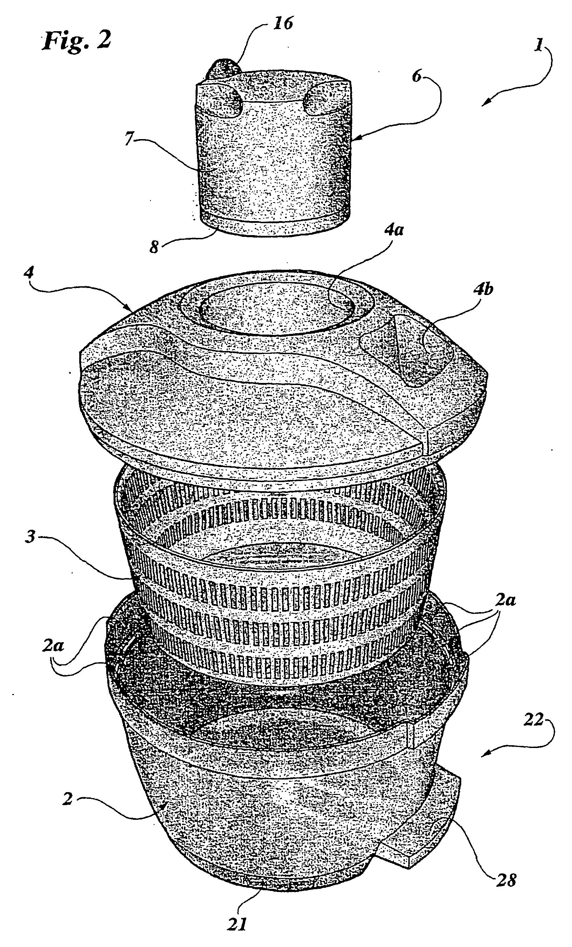

In Figures 1 to 3, a centrifuge for washing and drying salad and the like, which is produced in accordance with the present invention, is generally indicated 1.

The centrifuge 1 comprises a container 2 which is open at the top and which is produced, for example, from an opaque or at least partially transparent plastics material.

A perforated basket 3, which is likewise open at the top, is mounted rotatably in the container 2. Advantageously the basket is also produced, for example, from a plastics material.

The centrifuge 1 also comprises a lid which is generally indicated 4 and which can be coupled to the container 2. The lid is likewise advantageously produced from opaque or at least partially transparent moulded plastics material and has a substantially circular central opening 4a and (at least) one off-centre opening 4b, the functions of which will be described hereinafter.

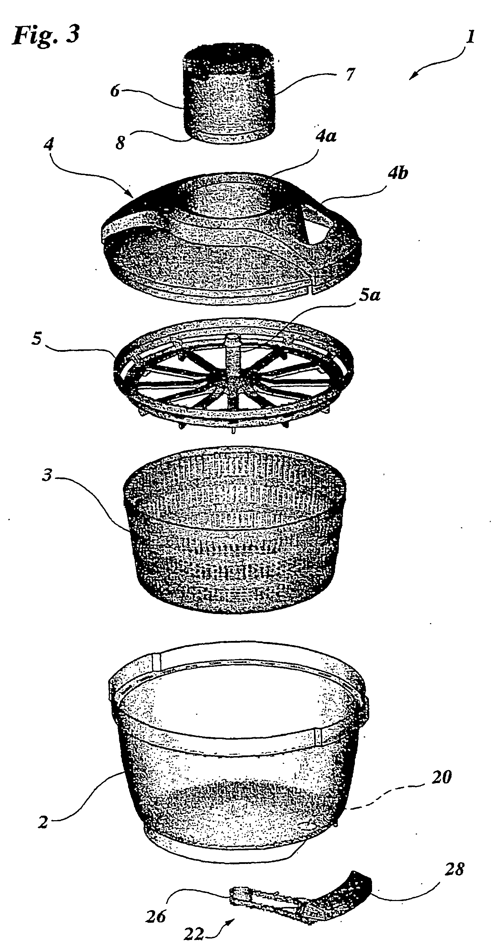

Referring to Figure 3, the centrifuge 1 also comprises a drive member 5 which, in the embodiment, is, by way of example, substantially in the form of spoked wheels, with a central tubular hub 5a projecting upwards. The drive member 5, which is rotatable relative to the lid 4, is, in a manner known per se, capable of being coupled to the basket 3 and of driving it in rotation.

Finally, the centrifuge 1 comprises an operating unit which is generally indicated 6 in Figures 1 to 6.

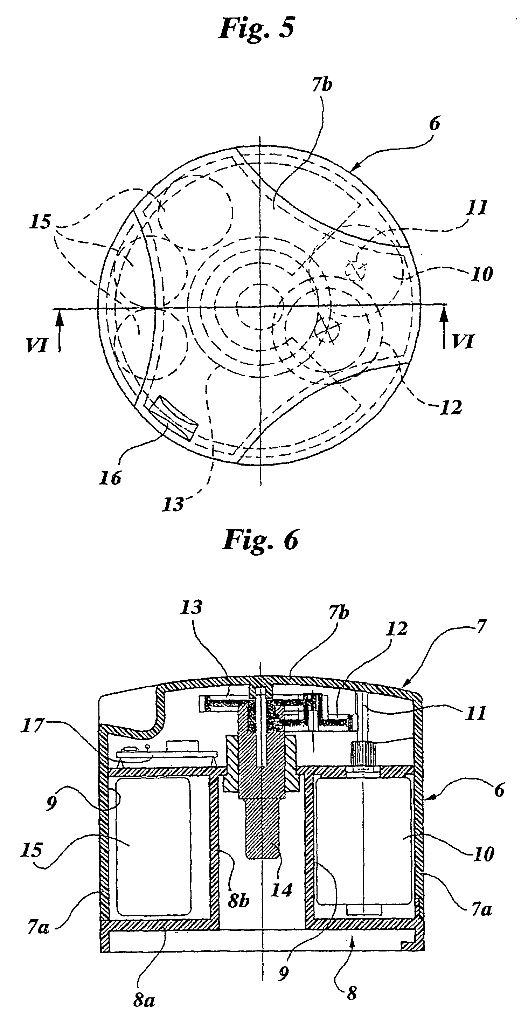

Referring to Figures 5 and 6, the operating unit comprises a support casing comprising a body 7 which is substantially in the form of an inverted beaker and which has a substantially cylindrical lateral surface 7a. Coupled at the bottom to the mouth of the body 7 is a base 8 (Figure 6) comprising an external annular rim 8a which is connected to a central cylindrical tubular protuberance 8b.
Defined between the lateral wall 7a of the body 7 and the wall of the protuberance 8b of the base 8 is an annular chamber 9 which accommodates an electrical control motor 10 whose shaft 11 is directed vertically and is coupled by way of a gear train 12 and 13 to an output shaft 14. As shown in Figure 6, the shaft 14 projects into the cavity or passage defined in the tubular protuberance 8b of the base 8.

Three batteries 15 (Figures 5 and 6) which are advantageously of the rechargeable type and which are used to supply power to the electrical motor 10 are also accommodated in the annular chamber 9 defined above.

A manually operated electrical switch 16 (Figures 1, 2 and 5) which is advantageously of the type having three positions is mounted in a suitable opening provided in the top wall 7b of the body 7.

The switch may optionally be mounted at the centre of the top wall 7b of the body 7.

At least one circuit board 17 (Figure 6) carrying the components of a circuit for controlling the functioning of the electrical motor 10 is also accommodated inside the casing of the operating unit 6. The circuit is connected to the switch 16.

The operating unit 6 which, according to the invention, is advantageously separate and distinct from the lid 4 of the centrifuge, is capable of being inserted in a removable manner into the opening 4a in the lid in such a manner that it is coupled in rotation to the drive member 5. The coupling in rotation is effected, in particular, as a result of the coupling between the tubular hub 5a of the drive member 5 and the output shaft 14 of the operating unit. When the operating unit 6 is inserted into the corresponding opening 4a in the lid 4, the tubular hub 5a of the drive member 5 penetrates into the appendage 8b of the operating unit and is coupled to the output shaft 14.

As mentioned above, the manually operated switch 16 is advantageously of the type having three positions.

A first position, or resting position, corresponds to the inactive state of the electrical motor 10.

The switch 16 can be switched from that position into a first working position in which the control circuit associated with the electrical motor 10 brings about the rotation of the motor in both directions alternately, at a low speed (washing speed).

The switch 16 can also be placed in a second working position in which the control circuit of the electrical motor 10 brings about the rotation of the motor continuously in a predetermined direction, at a relatively high speed (centrifugation speed).

As can be seen more clearly in Figure 1, the container 2 has, in the vicinity of its upper edge, a plurality of overflow openings 2a which are substantially at the same predetermined level.

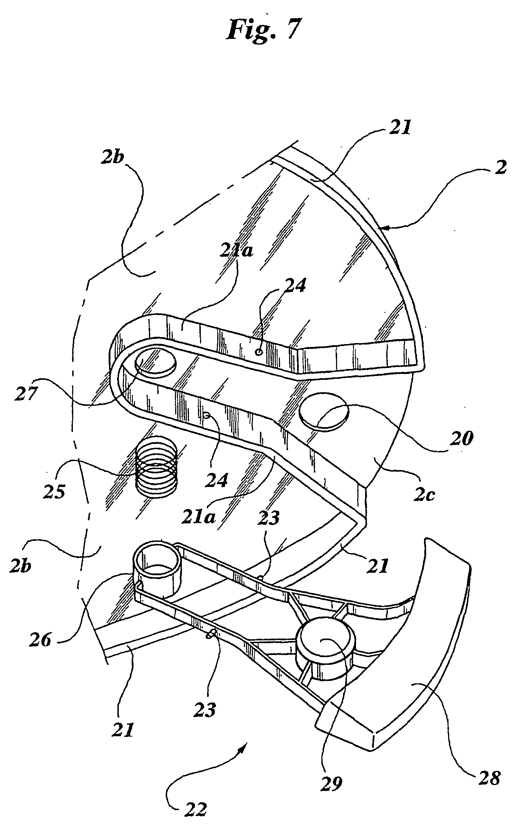

Referring to Figure 7, which is a partial perspective view of the container 2 from below, with parts shown in exploded form, the bottom wall 2b of the container 2 has a discharge opening indicated 20.

A rim 21 extends downwards from the periphery of the bottom wall 2b of the container 2. The discharge opening 20 is formed in a portion 2c of the bottom wall of the container 2, which portion is surrounded by a portion 21a of the above-mentioned rim, the portion 21a having a substantially U-shaped form with divergent distal ends (Figure 7).

In Figure 7, 22 indicates a control lever having, in its intermediate portion, a pair of aligned pegs or pins 23 which engage in corresponding openings 24 defined in two facing regions of the portion 21a of the rim 21. The pegs or pins 23 define the pivot axis of the lever 22.

A helical opposing spring 25 is interposed between an end member 26 of the lever 22, which end member is shaped in the form of a beaker, and a seat 27 provided in the portion 2c of the bottom wall of the container 2.

The opposite end of the lever 22, indicated 28 in Figures 1 to 3 and 7, projects laterally relative to the base of the container 2.

Between the end portion 28 and the pins 23, the lever 22 has a closure member 29 (Figure 7) associated with the discharge opening 20 of the container 2.

The arrangement is such that the spring 25 tends to maintain the lever 22 in a position in which the closure member 29 shuts off the discharge opening 20. The discharge opening can also be freed by exerting manual pressure on the end portion 28 of the lever 22, against the action of the opposing spring 25.

The centrifuge described above can be used in the following manner.

The centrifuge 1 can first of all be used for washing salad, green vegetables and the like. To that end, the salad or green vegetables to be washed are placed in the basket 3. The drive member 5 and the lid 4 are then coupled to the basket 3 and, respectively, to the container 2.

The centrifuge 1 can then be placed in a kitchen sink in such a manner that the opening 4b in the lid 4 is arranged below the water-delivery mouth of a tap. By means of the tap, a stream of water is introduced into the container 2 through the opening 4b in the lid and the openings in the drive member 5.

When the water in the container 2 reaches the level of the overflow openings 2a, it can spill over the outside of the container and into the sink.

The operating unit 6, which has previously been positioned in the opening 4a in the lid 4, can then be operated by means of the switch 16. The switch is located in the working position in which it brings about the operation of the electrical motor 10 alternately in the two opposing directions, at a relatively low speed.

The continuous stream of water, combined with the action of alternating movement conferred on the basket 3, permits an efficient washing action on the salad or the like contained in the basket.

The circuit which controls the electrical motor 10 may advantageously be programmed for a predetermined duration of the stage of washing with alternating motion.

For the washing stage, the user can pour into the container 2 a substance (liquid or pulverulent or solid and soluble) capable of improving the efficiency of the washing action and/or of disinfecting the salad or the like.

When it is considered that the salad or the like has been washed sufficiently, the user turns off the tap and, by means of the switch 16, deactivates the electrical motor 10 of the centrifuge.

The user can then discharge the water contained in the container 2 by pressing manually on the end 28 of the control lever 22 in such a manner as to disengage the closure member 29 from the discharge opening 20 of the container.

When the discharge of water from the container 2 has been completed, the user releases the lever 22 which, under the action of the spring 25, closes the discharge opening 20 again by means of the closure member 29.

At that point, the user can operate the switch 16, placing it in the working position in which it brings about the rotation of the electrical motor 10 continuously in a predetermined direction, at the relatively high centrifugation speed, for drying the salad or other green vegetables which have been previously washed.

After a centrifugation stage, the water yielded from the salad and collected in the container 2 can be evacuated through the discharge opening 20 by pressing on the end 28 of the lever 22.

For better drying, at least a second centrifugation stage may follow the first stage.

During the operation of the centrifuge 1, the operating unit 6 is disconnected from the electrical mains. This ensures safe operation for the user from an electrical point of view.

The operating unit 6 is also disconnectable from the centrifuge 1 and can be used as an operating device in association with other kitchen appliances or utensils. This characteristic is particularly advantageous.

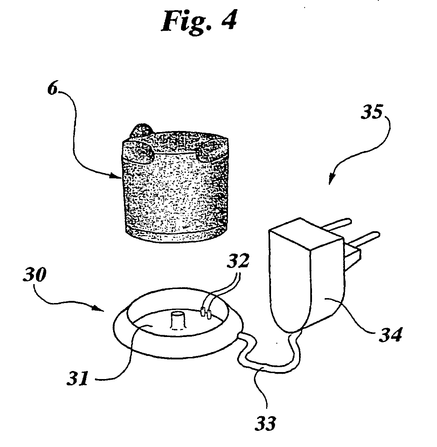

In order to recharge the batteries 15, the operating unit 6 may advantageously be coupled to a terminal board for the supply of electrical power, such as that indicated 30 in Figure 4. In the embodiment illustrated, the terminal board has an annular seat 31 in which the base of the operating unit 6 can be placed and in which extend electrical contact members 32 which are to be coupled to corresponding terminals of the batteries of the unit 6. The terminals 32 are connected by way of a multipolar cable 33 to a transformer/rectifier unit 34 which is advantageously integrated with a plug 35 insertable into a socket for connection to the electrical mains for supplying alternating current.

## Claims

1. A centrifuge (1) for drying salad or the like, comprising
a container (2) which is open at the top,
a perforated basket (3) which is rotatable in the container (2) and which is likewise open at the top,
a lid (4) which can be coupled to the container (2),
a drive member (5) which is rotatable relative to the lid (4) and which is capable of being coupled to the basket (3) and of driving it in rotation, and
an operating unit (6) comprising an electrical motor (10), capable of bringing about the rotation of the drive member (5) and of the basket (3) coupled thereto;
the centrifuge being **characterized in that** the operating unit (6) is separate and distinct from the lid (4) and is capable of being inserted removably into a housing (4a) provided in the lid (4) in such a manner that it is coupled in rotation to the drive member (5); the operating unit (6) also comprising at least one electrical battery (15), preferably of the rechargeable type, for supplying power to the motor (10).

2. A centrifuge according to claim 1, wherein the operating unit (6) comprises a support casing (7, 8) which accommodates the above-mentioned electrical motor (10) and the at least one battery (15), the casing having a cavity (8b) into which an output shaft (14) of the operating unit (6) projects; the drive member (5) having a control shaft (5a) capable of being introduced into the cavity (8b) of the casing (7, 8) of the operating unit (6) in order to be coupled to the output shaft (14) of the unit (6).

3. A centrifuge according to claim 1 or 2, wherein the operating unit (6) comprises circuit means for controlling the motor (10), which means can be activated by a manually operated switch (16) and are capable of bringing about selectively the rotation of the motor (10) in a predetermined direction at a relatively high speed or in both directions alternately at a relatively low speed.

4. A centrifuge according to any one of the preceding claims, provided with a device (30-35) for supplying electrical power which can be connected to the electrical mains and which comprises a base (31) capable of accommodating the operating unit (6) and provided with means (33-35) capable of permitting the recharging of the at least one battery (15) of the operating unit (6) with electrical power supplied from the mains.

5. A centrifuge according to any one of the preceding claims, wherein the lid (4) has at least one opening (4b) capable of permitting the introduction of a stream of water into the container (2) for washing the salad or the like contained in the basket (3).

6. A centrifuge according to claim 5, wherein the container (2) has at least one overflow opening (2a) at a predetermined level.

7. A centrifuge according to claim 5 or 6, wherein the container (2) has, at the bottom, at least one discharge opening (20) with which a removable closure member (29) is associated.

8. A centrifuge according to claim 7, wherein the closure member (29) is connected to a manually operated control lever (22) constrained in a rotatable manner at the bottom wall (2b, 2c, 21a) of the container (2).

9. A centrifuge according to claim 8, wherein the control lever (22) is articulated, at an intermediate portion thereof, to the bottom wall of the container (2), and has an end (28) which projects laterally relative to the container (2) and which can be pressed manually in order to uncouple the closure member (29) from the associated discharge opening (20) in the container (2), against the action of resilient means (25) which cooperate with the other end (26) of the lever (22) and which tend to maintain the lever in a position in which the closure member (29) shuts off the discharge opening (20).

## Patentansprüche

1. Zentrifuge (1) zum Trocknen von Salat oder Ähnlichem, wobei die Zentrifuge enthält:
einen Behälter (2), der oben offen ist,
einen perforierten Korb (3), der im Behälter (2) drehbar und gleichfalls oben offen ist,
einen Deckel (4), der mit dem Behälter (2) gekuppelt werden kann,
ein Antriebselement (5), das relativ zum Deckel (4) drehbar ist und mit dem Korb (3) gekuppelt werden kann, um diesen in Drehung zu versetzen, und
eine Betriebseinheit (6), die einen Elektromotor (10) enthält, der das Antriebselement (5) und den damit gekuppelten Korb (3) in Drehung versetzen kann;
wobei die Zentrifuge **dadurch gekennzeichnet ist, dass** die Betriebseinheit (6) vom Deckel (4) getrennt und selbständig ist und abnehmbar in ein Gehäuse (4a) eingesetzt werden kann, das im Deckel (4) so vorgesehen ist, dass es mit dem Antriebselement (5) für eine Drehung gekuppelt werden kann, und die Betriebseinheit (6) weiters zumindest eine elektrische Batterie (15), vorzugsweise eine wiederaufladbare Batterie, enthält, um den Motor (10) anzuspeisen.

2. Zentrifuge gemäß Anspruch 1, wobei die Betriebseinheit (6) ein Traggehäuse (7, 8) enthält, das den oben erwähnten Elektromotor (10) sowie die zumindest eine Batterie (15) aufnimmt, wobei das Gehäuse einen Hohlraum (8b) besitzt, in den eine Abtriebswelle (14) der Betriebseinheit (6) vorspringt; das Antriebselement (5) eine Steuerwelle (5a) besitzt, die in den Hohlraum (8b) des Gehäuses (7, 8) der Betriebseinheit (6) eingeführt werden kann, um mit der Abtriebswelle (14) der Einheit (6) verbunden zu werden.

3. Zentrifuge gemäß Anspruch 1 oder 2, wobei die Betriebseinheit (6) eine Schaltkreisstufe enthält, um den Motor (10) zu steuern, wobei diese Stufe mit einem händisch betätigbaren Schalter (16) in Betrieb gesetzt werden kann und wahlweise den Motor (10) mit einer relativ hohen Drehzahl in eine vorgegebene Richtung oder mit einer relativ niedrigen Drehzahl abwechselnd in beide Richtungen in Drehung versetzen kann.

4. Zentrifuge gemäß irgendeinem der bisherigen Ansprüche, wobei die Zentrifuge mit einer Vorrichtung (30-35) für das Zuführen von elektrischer Leistung ausgestattet ist, die mit dem Stromnetz verbunden werden kann und eine Basis (31) enthält, die die Betriebseinheit (6) aufnehmen kann, und die mit einer Einrichtung (33-35) ausgestattet ist, mit der die zumindest eine Batterie (15) der Betriebseinheit (6) mit elektrischem Strom wiederaufgeladen werden kann, der vom Stromnetz geliefert wird.

5. Zentrifuge gemäß irgendeinem der bisherigen Ansprüche, wobei der Deckel (4) zumindest eine Öffnung (4b) besitzt, durch die ein Wasserstrahl in den Behälter (2) eingeleitet werden kann, um den Salat oder Ähnliches zu waschen, der sich im Korb (3) befindet.

6. Zentrifuge gemäß Anspruch 5, wobei der Behälter (2) auf einem vorgegebenen Niveau zumindest eine Überlauföffnung (2a) besitzt.

7. Zentrifuge gemäß Anspruch 5 oder 6, wobei der Behälter (2) am Boden zumindest eine Entleerungsöffnung (20) besitzt, der ein abnehmbares Verschlusselement (29) zugeordnet ist.

8. Zentrifuge gemäß Anspruch 7, wobei das Verschlusselement (29) mit einem mit der Hand steuerbaren Hebel (22) verbunden ist, der drehbar in der Bodenwand (2b, 2c, 21a) des Behälters (2) eingespannt ist.

9. Zentrifuge gemäß Anspruch 8, wobei der Steuerhebel (22) an einer Zwischenstelle in der Bodenwand des Behälters (2) drehbar gelagert ist und ein Ende (28) besitzt, das relativ zum Behälter (2) seitlich vorspringt und mit der Hand gedrückt werden kann, um das Verschlusselement (29) von der zugeordneten Entleerungsöffnung (20) im Behälter (2) gegen die Wirkung einer Federeinrichtung (25) zu entkuppeln, die mit dem anderen Ende (26) des Hebels (22) zusammenwirkt und versucht, den Hebel in einer Stellung zu halten, in der das Verschlusselement (29) die Entleerungsöffnung (20) absperrt.

## Revendications

1. Centrifugeuse (1) pour sécher de la salade ou similaire, comprenant :
un récipient (2) ouvert sur le dessus,
un panier perforé (3) susceptible de tourner dans le récipient (2) et qui est également ouvert sur le dessus,
un couvercle (4) qui peut être couplé au récipient (2),
un élément d'entraînement (5) susceptible de tourner par rapport au couvercle (4) et qui peut être couplé au panier (3) et l'entraîner en rotation, et
un dispositif de commande (6) comprenant un moteur électrique (10), capable de mettre en rotation l'élément de commande (5) et le panier (3) couplé à ce dernier ;
la centrifugeuse étant **caractérisée en ce que** le dispositif de commande (6) est séparé et distinct du couvercle (4) et peut être inséré en vue de son retrait dans un logement (4a) prévu dans le couvercle (4) de telle sorte qu'il est couplé en rotation avec l'élément d'entraînement (5) ; le dispositif de commande (6) comprenant également au moins une batterie électrique (15), de préférence de type rechargeable, pour fournir de l'énergie au moteur (10).

2. Centrifugeuse selon la revendication 1, dans laquelle le dispositif de commande (6) comprend un corps formant support (7,8) qui loge le moteur électrique (10) susmentionné et au moins une batterie (15), le corps étant muni d'une cavité (8b) dans laquelle se projette un arbre de sortie (14) du dispositif de commande (6) ; l'élément d'entraînement (5) possédant un arbre de commande (5a) pouvant être introduit dans la cavité (8b) du corps (7,8) du dispositif de commande (6) afin d'être couplé à l'arbre de sortie (14) du dispositif (6).

3. Centrifugeuse selon la revendication 1 ou 2, dans laquelle le dispositif de commande (6) comprend des moyens formant circuit destinés à commander le moteur (10), lesquels moyens peuvent être activés par un bouton (16) actionné manuellement et peuvent entraîner en rotation le moteur (10) de manière sélective dans un sens prédéterminé à une vitesse relativement élevée ou dans les deux sens de manière alternative à une vitesse relativement faible.

4. Centrifugeuse selon l'une quelconque des revendications précédentes, munie d'un dispositif (30-35) destiné à fournir de l'électricité qui peut être relié au réseau électrique et qui comprend une base (31) pouvant loger le dispositif de commande (6) et pourvue de moyens (33-35) pouvant permettre le rechargement d'une batterie (15) au moins du dispositif de commande (6) avec de l'électricité fournie par le secteur.

5. Centrifugeuse selon l'une quelconque des revendications précédentes, dans laquelle le couvercle (4) possède au moins une ouverture (4b) pouvant permettre l'introduction d'un jet d'eau à l'intérieur du récipient (2) pour laver la salade ou similaire contenue dans le panier (3).

6. Centrifugeuse selon la revendication 5, dans laquelle le récipient (2) possède au moins une ouverture de trop plein (2a) située à un niveau prédéterminé.

7. Centrifugeuse selon la revendication 5 ou 6, dans laquelle le récipient (2) possède, au niveau du fond, au moins une ouverture d'écoulement (20) à laquelle un élément de fermeture amovible (29) est associé.

8. Centrifugeuse selon la revendication 7, dans laquelle l'élément de fermeture (29) est relié à un levier de commande (22) actionné manuellement, maintenu en vue de sa rotation sur la paroi inférieure (2b, 2c, 21a) du récipient (2).

9. Centrifugeuse selon la revendication 8, dans laquelle le levier de commande (22) est articulé, au niveau d'une partie intermédiaire de ce dernier, sur la paroi inférieure du récipient (2), et possède un extrémité (28) qui se projette dans le sens latéral par rapport au récipient (2) et qui peut être pressé manuellement pour libérer l'élément de fermeture (29) de l'ouverture d'écoulement (20) associée dans le récipient (2), sous l'action de moyens élastiques (25) qui coopèrent avec l'autre extrémité (26) du levier (22) et qui tendent à maintenir le levier dans une position dans laquelle l'élément de fermeture (29) ferme l'ouverture d'écoulement (20).
